# EUROPEAN PATENT SPECIFICATION

(11) **EP 3 072 797 B1**
(45) Date of publication and mention of the grant of the patent: **27.01.2021**
(21) Application number: 16156464.6
(22) Date of filing: 19.02.2016
(51) Int. Cl.: B62J 45/414, B62J 45/412

(54) **SYSTEM FOR CONTROLLING A PEDAL ASSISTED BICYCLE**
FAHRZEUGSTEUERUNGSSYSTEM FÜR EIN PEDALUNTERSTÜTZTES FAHRRAD
SYSTÈME DE COMMANDE DE BICYCLETTE ASSISTÉE À PÉDALES

(30) Priority: 23.03.2015 IT UB20150136
(43) Date of publication of application: 28.09.2016
(73) Proprietor: ZEHUS S.p.A., 20122 Milan (IT)
(72) Inventor: Corno, Matteo, 20134 Milano (IT); Savaresi, Sergio Matteo, 26100 Cremona (CR) (IT); Lisanti, Paolo, 24040 Lallio (BG) (IT)
(74) Representative: Penza, Giancarlo

(56) References cited:
- EP-A1- 2 476 605
- WO-A1-2011/072942
- DE-A1-102012 206 615
- DE-A1-102013 200 485
- JP-A- 2008 062 769
- US-A1- 2014 046 541

## Description

### Technical field of the invention

The present invention refers to the field of the pedal-assisted bicycles, in other words refers to a particularly type of bicycles equipped with an electric motor suitable for supplying power besides the one supplied by the cyclist. The present invention finds a particularly but non exclusive application in the field of the so-called "all-in-the-wheel" pedal-assisted bicycles, in other words bicycles whose motor, batteries, sensors, and control electronics are received in a single housing associated to a wheel of the bicycle.

Particularly, the present invention refers to a control system for a pedal-assisted bicycle provided with a module for determining the presence or absence of the cyclist on the bicycle itself. Sensing the presence/absence of the cyclist on the bicycle enables to keep active the control of the electric motor (slave condition) only when the cyclist is really on the saddle, avoiding therefore accidentally starting the motor in situations different than the conditions of the bicycle use.

### Prior art

Control systems for pedal-assisted bicycles, provided with modules for detecting the presence/absence of the cyclist, are known.

Such modules generally determine the presence or absence of the cyclist based on signals supplied by dedicated sensors. For example, detecting the presence of the cyclist can be performed by dedicated pressure sensors arranged in the saddle, capable of detecting the weight of the cyclist him/herself.

Further known solutions provide, for example, the presence of pressure sensors on the pedals, or sensors for detecting the torque applied to the same. These two solutions determine the presence of the cyclist based on the detection of an action on the pedals exerted by the same.

However, such solutions have the inconvenience of causing difficulties in installing and wiring the sensors necessary for detecting the presence of the cyclist and for connecting them to the control module.

Document DE 102013200485 discloses a method for detecting a maintenance situation in an electric bicycle, which is turned upside down in order to access to the parts requiring repair: in this case it is necessary to avoid the unintentional activation of the electric motor of the bicycle, which can cause injuries to the user.

DE 102013200485 further discloses that the electric bicycle includes a first sensor for detecting the orientation of the bicycle with reference to the ground or the roadway and includes a second sensor for detecting the change of the bicycle riding-dynamics, such as speed or acceleration in a longitudinal direction.

US 2014/046541 A1 which is considered as the closest prior art, discloses an electric bicycle comprising an angle sensing unit used for sensing a tilting angle of the electric bicycle on the road, wherein the angle sensing unit can be a G sensor, which senses a gravity change of a movement direction of the electric vehicle to provide a three-axis acceleration value (e.g. a gravity acceleration value of X axis, Y axis, and Z axis), so as to provide the tilting angle.

DE 102012206615 discloses a method for controlling the operation of an electric motor of a pedal assisted bicycle, by reducing or stopping (briefly) the operation of the motor for avoiding the legs of the cyclist (who is pushing the bicycle in some circumstances) to be injured by the pedals which continues to be driven by the motor for helping the cyclist to push the bicycle.

### Brief summary of the invention

Therefore, the problem underlying the present invention consists of making available a control system for a pedal-assisted bicycle, provided with a module for detecting the presence of the cyclist, different from the ones cited with reference to the prior art.

The invention is defined by the appended claims.

Specifically, an object of the present invention consists of making available a control system for a pedal-assisted bicycle, comprising a module for determining the presence or absence of the cyclist which does not require to add a high number of sensors and that possibly exploits at least partially the already present sensors in the bicycle for controlling it, such as for example the inertial sensors.

This and other objects are met by a pedal-assisted bicycle according to claim 1. The dependent claims define possible advantageous embodiments of the invention.

### Brief description of the drawings

In order to better understand the invention and appreciate its advantages, some exemplifying non limiting embodiments thereof will be described in the following with reference to the attached figures, wherein:
- Figure 1 is a schematic view of a portion of the pedal-assisted bicycle provided with a control system according to the invention;
- Figure 2 is a block diagram of the control system according to a possible embodiment of the invention;
- Figure 3 is a block diagram of a module of the control system, for determining the presence or absence of the cyclist, according to a possible embodiment of the invention;
- Figure 4 is a block diagram of a module for checking the oscillating mass of the module for determining the presence or absence of the cyclist of the control system according to a possible embodiment of the invention;
- Figure 5 is a block diagram of a module for checking the yaw stability of the module for determining the presence or absence of the cyclist of the control system, according to a possible embodiment of the invention;
- Figure 6 is a block diagram of a module for checking the cyclist mass of the module for determining the presence or absence of the cyclist of the control system, according to a possible embodiment of the invention.

### Detailed description of the invention

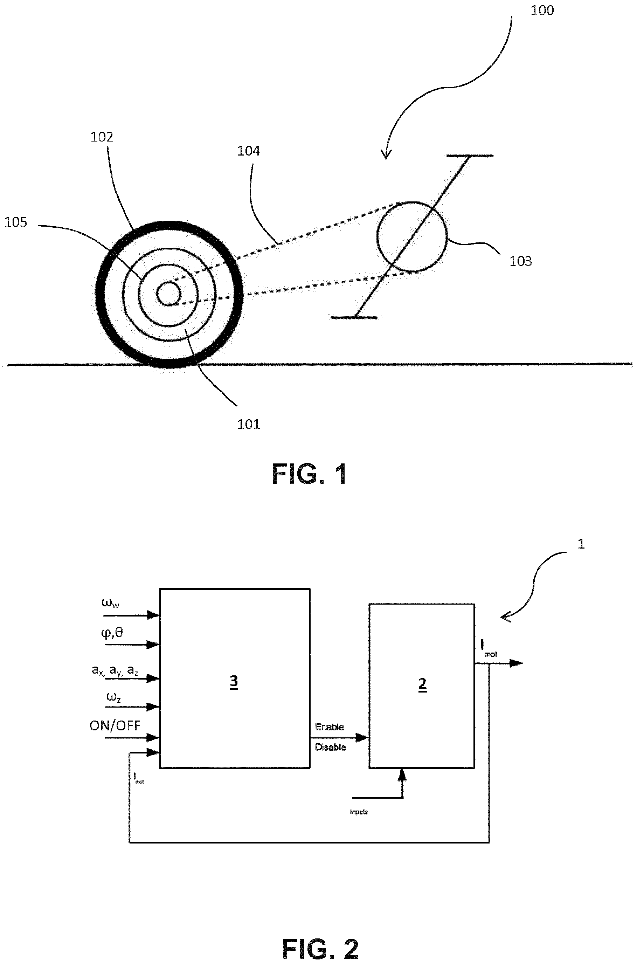

Figure 1 schematically illustrates a portion of a pedal-assisted bicycle 100. The bicycle 100 comprises an electric motor 101 associated to a wheel 102 of the bicycle wheels, the front one or preferably the rear wheel. Further, the bicycle 100 comprises a pedal-thrust group 103, by which the user can supply power to the bicycle, connected to one of the wheels, preferably the same wheel 102 to which the motor 101 is associated, by a transmission 104, for example a chain transmission. Preferably, the transmission 104 comprises a free-wheel mechanism 105 enabling to disconnect the wheel 102 and the pedal-thrust group 103 in case, under advancement conditions, the wheel 102 speed is greater than the one of the pedal-thrust group 103, or of the pinion associated to the wheel 102 in case between the pedal-thrust group 103 and the wheel, it is provided the same. The free-wheel mechanism 105 for example enables to move backward the pedal-thrust group 103 or possibly stop pedaling by preventing this from interfering with the advancement movement of the wheel and therefore of the bicycle itself during its motion.

Referring to Figure 2, the bicycle 100 is provided with a control system 1 commanding the electric motor 101 to assist the cyclist in pedaling. Particularly, the control system 1 comprises an actual control module 2 commanding the electric motor, which, particularly, supplies, at the output, the current Iₘₒₜ, on which the motive torque of this latter depends. The control module can operate according to a variety of per se known modes based on inputs ("INPUT") from the system sensors.

Moreover, the control system 1 comprises a module 3 for determining the presence or absence of the cyclist. The module 3, whose operation will be specifically described in the following, establishes the presence and absence of the cyclist and supplies, at the output, an activation or deactivation signal ("Enable/Disable") according to whether the cyclist presence or absence has been detected, respectively. Such activation/deactivation signal is supplied to the control module 2, so that the motor is activated and controlled by the current Iₘₒₜ only when the cyclist presence has been detected, and is deactivated in the opposite case. In this way, the electric motor is prevented from supplying a motive torque when the cyclist is not on the saddle. According to the invention, the electric motor current Iₘₒₜ is also a signal entering the module 3, for determining the presence or absence of the cyclist.

The control system 1 comprises a sensor configured for detecting the speed, particularly the angular speed ω_{w} of a wheel, preferably of the wheel 102 which the motor 101 is associated to. Such sensor is suitable for generating a signal representative of said wheel speed ω_{w}.

The control system 1 comprises an inertial measuring unit suitable for measuring one or more accelerations of the bicycle, particularly one or more of the longitudinal acceleration aₓ (that is along the bicycle roll axis), lateral acceleration a_{y} (that is along the bicycle pitch axis), and vertical acceleration a_{z} (that is along the bicycle yaw axis) and for generating signals representative of the same According to the invention, at least the longitudinal acceleration is measured.

Preferably, the inertial measuring unit is also adapted to detect one or more angular speeds of the same, particularly at least the yaw speed ω_{z}, and to generate signals representative of the same. The signals from the inertial measuring unit are supplied, at the inlet, to the module 3 for determining the presence or absence of the cyclist. Moreover, according to the type of control algorithm implemented in the control module 2, they can be completely or partially supplied as inputs ("INPUT") to the control module 2.

According to a possible embodiment, the system 1 further comprises a module (not shown in the figures) for detecting the bicycle roll angle ϕ suitable for generating a signal representative of the roll angle ϕ, and/or a module for determining the slope θ of the road along which the bicycle advances (in other words the yaw angle with respect to an ideal horizontal plane) and for generating a signal representative of the same. Such modules can comprise suitable roll and slope sensors capable of directly measuring the roll ϕ and yaw angles θ. Alternatively, such module can be configured for estimating such magnitudes based on signals from the inertial measuring unit.

Moreover, the system comprises a starting device commandable by the cyclist, suitable for supplying an activation/deactivation signal ("ON/OFF") to the module 3 for determining the presence/absence of the cyclist. Such starting device is commanded by the cyclist and has the function of supplying the on/off command of the system 1. The starting device can for example include a push-button commandable by the cyclist.

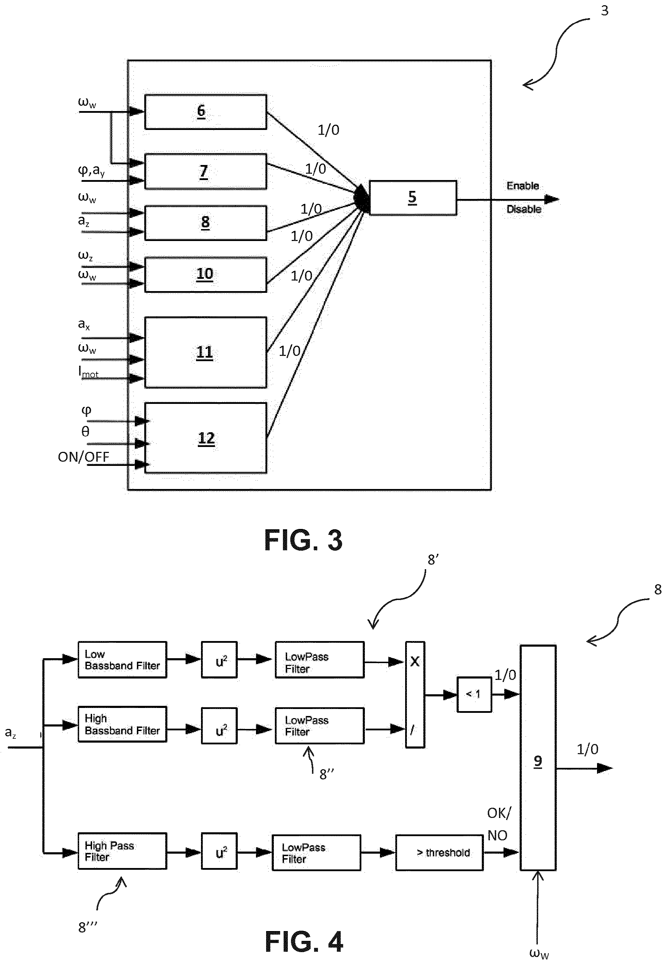

Referring now to Figure 3, the module 3 for determining the presence or absence of the cyclist according to a possible embodiment of the invention is shown. Such module 3 for determining the presence or absence of the cyclist comprises modules 6 and 11 and preferably one or more modules 7, 8, 10, 12 for preliminarily determining the presence of absence of the cyclist, each of them preliminarily estimates such presence/absence based on a rule varying according to the available signals in the systems, and outputs a cyclist absence/presence preliminary signal (conventionally, in Figure 3, "1" indicates the cyclist presence preliminary signal, and "0" the cyclist absence preliminary signal). Further, the module 3 comprises a synthesis module 5 configured for generating the activation/deactivation signal ("Enable/Disable") to be sent to the motor control module 2, based on the cyclist absence/presence preliminary signals generated by each of the modules 6, 7, 8, 10, 11, 12 for preliminarily determining the presence or absence of the cyclist, previously cited.

A detailed description of the module for preliminarily determining the presence or absence of the cyclist will be given. According to possible alternative embodiments, the system 1 comprises some or all the modules for preliminarily determining the presence or absence of the cyclist, which will be described in the following.

According to the invention, the module 3 for determining the presence or absence of the cyclist, comprises a module 6 for checking the speed. Such module 6 receives, at the input, the signal representative of the wheel speed ω_{w}, and is configured for comparing such wheel speed with a first threshold value. If the wheel speed ω_{w} is greater than such first threshold value, the module 6 supplies, at the output, a cyclist presence preliminary signal. Instead, as long as the first threshold value is not exceeded, the module 6 supplies, at the output, a preliminary cyclist absence signal. After generating the preliminary cyclist presence signal, the module 6 generates a preliminary cyclist absence signal when the signal representative of the wheel speed ω_{w} supplies a speed wheel value less than a second speed threshold value, preferably less than the first threshold value.

According to an embodiment, the module 3 for determining the presence/absence of the cyclist, also comprises a module 7 for checking the roll stability. The roll stability checking module 7 is based on the fact that a still bicycle cannot stand upright (in other words with a roll angle ϕ equal to 0°), and further, when the bicycle is moving at a determined speed, the roll angle ϕ does not excessively deviates from a determined equilibrium value. Therefore, the roll stability checking module 7 receives, at the input, the signal representative of the wheel speed ω_{w} and the signal representative of the (directly estimated or measured) roll angle ϕ and is configured for comparing the detected roll angle value with a predetermined roll angle threshold value corresponding to the detected wheel speed ω_{w} (corresponding to a determined linear speed of the bicycle). If the absolute value of the difference between the detected roll angle value and the roll angle threshold value is less than a predetermined difference, the roll stability checking module 7 supplies, at the output, a preliminary cyclist presence signal. On the contrary, the roll stability checking module 7 supplies, at the output, a preliminary cyclist absence signal.

As an alternative, the roll stability checking module 7 can be based on a comparison of the absolute value of the detected lateral acceleration a_{y} with a predetermined threshold value of the lateral acceleration corresponding to a bicycle speed, which can be again determined on the signal representative of the wheel speed ω_{w}. Therefore, the roll stability checking module 7 receives, at the input, the signal representative of the wheel speed ω_{w} and the signal representative of the lateral acceleration a_{y}. If the absolute value of the detected lateral acceleration is greater than the predetermined acceleration threshold value corresponding to the detected bicycle speed, the roll stability checking module 7 supplies, at the output, a preliminary cyclist absence signal. On the contrary, the roll stability checking module 7 supplies, at the output, a preliminary cyclist presence signal.

According to an embodiment, the module 3 for determining the presence or absence of the cyclist, also comprises a module 8 for checking the oscillating mass. Such module 8 determines the presence or absence of the cyclist by considering that the mass variation caused by the cyclist presence, changes the bicycle vertical resonance frequency which, particularly, decreases when the cyclist is present. Figure 4 shows a block diagram illustrating the operation of the oscillating mass checking module 8 according to a possible embodiment of the invention. The module 8 receives, at the input, the signal representative of the vertical acceleration a_{z} and, further, the signal representative of the wheel speed ω_{w}. This latter magnitude is necessary since the estimate of the cyclist presence based on the resonance frequency shift, requires the bicycle to be in motion as a condition for activating the module 8 itself.

The module 8 comprises a first 8' and a second portions 8" configured for determining the energy of the signal representative of the vertical acceleration in a first and second frequency bands, respectively. The first band, selected at a low level (for example comprised between 0 and 5 Hz), corresponds to the presence of the cyclist, while the second band, selected at a higher level (for example between 5 and 25 Hz) corresponds to the absence of the cyclist. Moreover, the module 8 comprises preferably a third portion 8'" for checking the overall vertical energizing level of the system, so that situations wherein the vertical resonance analysis is not reliable, are not considered, for example when the bicycle moves along a perfectly smooth road.

With reference to the first portion 8', it receives, at the input, the signal representative of the vertical acceleration a_{z}. It comprises a low pass-band filter adapted to filter the signal in the above cited first frequency band. Moreover, the first portion 8' comprises a module calculating the energy associated to the signal, for example configured for calculating the quadratic value of the acceleration filtered in the first frequency band ("u²"). Moreover, the first portion 8' preferably comprises a low-pass filter adapted to limit the signal oscillations. The second portion 8" has a similar arrangement. Specifically, it receives, at the input, the signal representative of the vertical acceleration a_{z}. It comprises a high pass-band filter adapted to filter the signal representative of the vertical acceleration a_{z} in the above cited second frequency band. Moreover, the second portion 8" comprises a module calculating the energy associated to the signal, for example configured for calculating the quadratic value of the acceleration filtered in the second frequency band ("u²"). Further, the second portion 8" preferably comprises a low-pass filter adapted to limit the signal oscillations.

The vertical acceleration signals processed in the first 8' and second portions 8" are compared in a comparison module (X I). If the energy associated to the vertical acceleration signal filtered in the first frequency band is greater than the energy associated to the vertical acceleration signal filtered in the second frequency band, the comparison module (X I) delivers, at the output, a provisional cyclist presence signal. On the contrary, the comparison module (X I) delivers, at the output, a provisional cyclist absence signal. However, such signal is not already the preliminary cyclist absence/presence signal supplied by the oscillating mass checking module 8 since it is necessary a further check of the vertical energizing state of the system supplied by the third portion 8"'.

According to the illustrated embodiment, the third portion 8'" comprises a highpass filter adapted to cancel from the signal representative of the vertical acceleration a_{z}, the constant term due to the gravity acceleration. Moreover, the third portion 8'" comprises a module calculating the energy associated to the signal, for example configured for calculating the quadratic value of the vertical acceleration filtered in the cited way ("u²"). Further, the third portion 8'" preferably comprises a low-pass filter adapted to limit the signal oscillations. Lastly, the third portion 8'" comprises a comparator module (">Threshold") comparing the total energy of the signal filtered as said, with a predetermined threshold energy value, and is configured for delivering an authorization signal ("OK") to the synthesis module 9 if such energy is greater than a predetermined threshold value, or a non-authorization signal ("NO") in the opposite case. Advantageously, if the synthesis module 9 receives at the input the authorization signal from the comparator module (">Threshold"), it is configured for delivering, at the output, as a preliminary cyclist presence/absence signal, the provisional signal presence/absence signal determined by the comparison module (X I) On the contrary, if the synthesis module 9 receives at the input the non-authorization signal from the comparator module (">Threshold"), is configured for disregarding the provisional cyclist presence/absence signal determined by the comparison module (X I) and for delivering, at the output, a cyclist presence/absence signal based on a predetermined selection. In such case, it is possible to cause the synthesis module 9 to always output a cyclist presence signal for implementing a system which is reactive but less reliable, or an absence signal for obtaining, on the contrary, a system which is more reliable but slower in assisting (in other words when it is started the assisted pedal-thrust).

According to a possible embodiment, the module 3 for determining the presence or absence of the cyclist, also comprises a module 10 for checking the yaw stability. Such module exploits the fact that when a cyclist is on the saddle and pedals at a slow speed, he/she should perform some actions which can be considered as rotations around the vertical axis (in other words around the yaw axis) for stabilizing the bicycle itself.

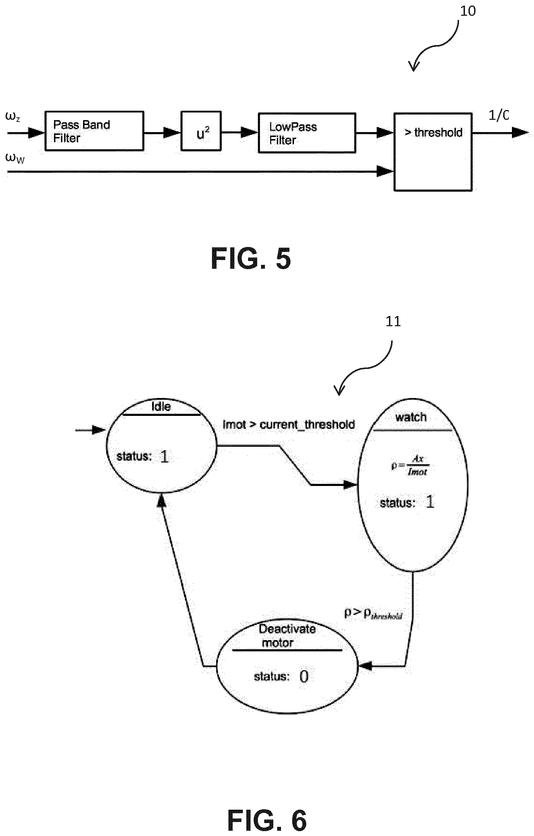

Figure 5 shows a possible block diagram of the module 10 for checking the yaw stability. The module 10 receives, at the input, the signal representing the yaw speed ω_{z} detected for example by the above described inertial measuring unit, and in addition the signal representing the wheel speed ω_{w}. Advantageously, the module 10 comprises a pass-band filter receiving, at the input, the signal representative of the yaw speed ω_{z} for filtering it in a predetermined frequency band, preferably in a band proximate to zero, for example comprised between 0.2 and 1 Hz. Actually, it has been experimentally verified that in such low frequency bands, frequency response differences were found in case of a cyclist on the saddle at low speed, and in case of the cyclist absence. Preferably, the frequencies proximate to zero should be avoided for not taking in consideration the case of a "stationary turning" condition, while at high frequencies they should be preferably avoided for excluding measurement noises.

Moreover, the module 10 comprises a module for calculating the energy associated to the signal, for example configured for calculating the quadratic value of the yaw angular speed filtered in the way called ("u²"). Moreover, preferably the module 10 comprises a low-pass filter adapted to limit the signal oscillations. Lastly, the module 10 comprises a comparator module (">Threshold") comparing the total energy of the signal representative of the yaw angular speed ω_{z} filtered as said, with a predetermined energy threshold value, and is configured for supplying a preliminary cyclist presence signal if such energy is greater than such predetermined threshold value, or a preliminary cyclist absence signal in the opposite case. Moreover, it is observed that the comparator module receives, at the input, the signal representative of the wheel speed ω_{w}. Actually, estimating the cyclist presence/absence by the said rule is effective only when the bicycle is moving. Therefore, the comparator module is configured for supplying, at the output, the preliminary cyclist absence/presence signal according to the said modes only if the signal representative of the wheel speed ω_{w} is positive, in other words if the bicycle is moving. Viceversa, if the wheel speed is zero, in other words if the bicycle is still, the comparator module (">Threshold") is configured for supplying, at the output, a cyclist presence/absence signal based on a predetermined selection. In such case, it is possible to cause the comparator module to supply a cyclist presence signal for obtaining a system which is reactive but less reliable, or an absence signal for, on the contrary. obtaining a system which is less reliable but slower in assisting (in other words when it is started the assisted pedal-thrust).

According to the invention, the module 3 for determining the presence of absence of the cyclist, further comprises a module 11 for checking the cyclist mass. The module 11, in comparison with the previously described modules, operates afterwards, particularly for correcting possible erroneous outcomes regarding the presence of the cyclist supplied by such modules, which are not capable of estimating the cyclist presence in any possible condition. For example, if the bicycle is pushed by hand in a perfectly vertical position on a perfectly smooth surface, the above described modules can possibly determine that the cyclist is present. Under these circumstances, if the pedal is unintentionally hit, the motor can be possibly turned on and therefore the bicycle could escape the user control. The module 11, under these circumstances, acts for avoiding this dangerous situation which can happen under such circumstances.

Figure 6 illustrates a possible block diagram of the cyclist mass checking module 11, which implements a state machine.

The module 11 receives, at the input, the signals representative of the longitudinal axis aₓ and of the previously defined motor current Iₘₒₜ. Moreover, the module 11 receives, at the input, the signal representative of the wheel speed ω_{w} for allowing an action only if the bicycle is actually moving.

The cyclist mass checking module 11 is configured, when the value associated to the signal representative of the wheel speed ω_{w} is positive, for:
- being normally in an activation state ("Idle"): under such condition a preliminary cyclist presence signal ("status: 1") is provided at the output;
- comparing the signal representative of the motor current Iₘₒₜ with a predetermined current threshold value ("current_threshold");
- switching to an alert state ("watch") in case the signal representative of the motor current Iₘₒₜ is greater than the predetermined current threshold value ("current_threshold"). Under such condition, a preliminary cyclist presence signal ("status: 1") is still provided at the output;
- in case of an alert state, determining the ratio ρ of the motor current Iₘₒₜ to the longitudinal acceleration aₓ of the bicycle;
- if such ratio ρ is greater than a predetermined threshold value ρ_{threshold}, switching to a disabling state in order to disable the motor ("Deactivate motor"). Such operation causes a preliminary cyclist absence signal ("status: 0") which is interpreted as predominant by the synthesis module 5. In this way, possible estimate errors of the cyclist presence, supplied by other modules, are corrected.

Then, the module 11 can switch again to an activation state ("Idle"), and the cycle can restart as described.

According to a possible embodiment, the module 3 for determining the presence or absence of the cyclist 3, comprises a human-machine interface module 12. It receives, at the input, the activation/deactivation signal ("ON/OFF") supplied by the user and at least one of the signal representative of the roll angle ϕ and the signal representative of the pitch angle θ. Such module 12 has the function of enabling to deactivate the assistance of the motor, due to determined actions performed by the user on the bicycle, detectable by sensors installed on the same. Therefore, the module 12 supplies, at the output, a preliminary cyclist absence/presence signal based on the above cited signals received at the input.

For example, the module 12 is configured for supplying, at the output, a preliminary cyclist absence signal at the occurrence of at least one of the following circumstances:
- the activation/deactivation signal corresponds to a deactivation condition;
- the signal representative of the pitch angle θ exceeds a predetermined threshold value. This condition occurs when for example the user stows the bicycle away by vertically raising the front wheel.
- The signal representative of the roll angle ϕ exceeds a predetermined threshold value. This condition occurs when, for example, the user stows the bicycle away by laterally inclining it.

As said, each above described modules 6, 7, 8, 10, 11, 12 supplies at the output, a preliminary cyclist presence/absence signal, each of them is supplied to the synthesis module 5 which, based on these input preliminary signals, performs a synthesis of the preliminary signals and supplies a single activation or deactivation end signal to the control module. The synthesis can be performed by suitable truth tables assigning a determined weight to each estimates supplied by the several modules. Obviously, different truth tables are provided according to design choices. As an example, a possible truth table is shown indicating, based on a combination of preliminary cyclist presence/absence signals supplied by the several modules for estimating the presence or absence of the cyclist, which will be the cyclist end presence/absence signal, in other words the activation/deactivation signal, which is supplied by the synthesis module to the control module.

| **Module 6** | **Module 7** | **Module 8** | **Module 10** | **Module 11** | **Module 12** | **Module 5 (output)** |
|---|---|---|---|---|---|---|
| * | * | * | * | 1 | 0 | Disable |
| * | * | * | * | 0 | 1 | Disable |
| 0 | 0 | 0 | 0 | 1 | 1 | Disable |
| 0 | 0 | 0 | 1 | 1 | 1 | Disable |
| 0 | 0 | 1 | 0 | 1 | 1 | Disable |
| 0 | 0 | 1 | 1 | 1 | 1 | Disable |
| 0 | 1 | 0 | 0 | 1 | 1 | Enable |
| 0 | 1 | 0 | 1 | 1 | 1 | Enable |
| 0 | 1 | 1 | 0 | 1 | 1 | Disable |
| 0 | 1 | 1 | 1 | 1 | 1 | Enable |
| 1 | * | * | * | 1 | 1 | Enable |

Wherein:
-0 is a preliminary cyclist absence signal;
-1 is a preliminary cyclist presence signal;
-* indicates indifferently the preliminary cyclist presence (1) or absence (0) signal;
-Enable/Disable indicate respectively an activation signal or a deactivation signal, in other words a signal estimating the presence or absence of the cyclist, respectively by the synthesis module 5.

In the present description and in the attached claims, it is noted that the control system 1, and also the elements indicated by the term "module", can be implemented by hardware devices (for example control units) or by a combination of hardware and software.

## Claims

1. A pedal assisted bicycle (100) comprising an electric motor (101) associated to a wheel (102) of the bicycle, a pedal-thrust group (103) to be pedaled by a user, a transmission (104) operatively interposed between said pedal-thrust group (103) and one of the wheels (102) of the bicycle, and a control system (1) comprising:
- a sensor configured for detecting the speed (ω_{w}) of said wheel (102) and for generating a signal representative of the wheel speed;
- an inertial measuring unit configured to detect a longitudinal (aₓ) acceleration of the bicycle and preferably one or more of the lateral acceleration (a_{y}), the vertical acceleration (a_{z}) and the yaw angular speed (ω_{z}) of the bicycle generate a signal representative of the same;
- a starting device adapted to deliver an activation or deactivation signal (ON/OFF) following an activation or deactivation command by the cyclist;
- a module (2) for controlling the electric motor (102), the control module being configured to deliver a motor current (Iₘₒₜ) to be delivered to the electric motor (102) for controlling the same;
- a module (3) for determining the presence or absence of the cyclist on the bicycle, the determining module being configured to deliver to the control module (2) of the electric motor (102) an activation or deactivation signal (Enable/Disable) according to whether it is detected the presence or absence of the cyclist, respectively;
wherein said determining module (3) comprises a plurality of modules (6, 7, 8, 10, 11, 12) for preliminarily determining the presence or absence of the cyclist, each configured for generating a corresponding preliminary signal of presence or absence of the cyclist (1/0) based on one or more among the motor current (Iₘₒₜ), the signal representative of the wheel speed (ω_{w}), the activation/deactivation signal of the starting device (ON/OFF), the one or more signals representative of one or more magnitudes detected by the inertial measuring unit (aₓ, a_{y}, a_{z}, ω_{z});
**characterized in that** the plurality of modules comprises:
- a speed checking module (6) configured to receive the signal representative of the wheel speed (ω_{w}) and to supply a first preliminary signal of absence or presence of the cyclist based on a comparison of the signal representative of the wheel speed (ω_{w}) with one or more predetermined speed threshold values;
- a cyclist mass checking module (11) configured to receive the signal representative of the wheel speed (ω_{w}), the signal representative of the motor current (Iₘₒₜ) and the bicycle longitudinal acceleration (aₓ),
wherein the cyclist mass checking module is configured to, when the wheel speed value associated to the signal representative of the wheel speed (ω_{w}) is positive:
• to be normally in an activation state ("Idle") and to supply a second preliminary signal of the presence of the cyclist;
• compare the signal representative of the motor current (Iₘₒₜ) with a predetermined current threshold value ("current_threshold");
• switch to an alert state ("watch") in case the value associated to the signal representative of the motor current (Iₘₒₜ) value is greater than the predetermined current threshold value ("current_threshold") and supply the second preliminary signal of the presence of the cyclist;
• when it is in an alert state, determine a ratio (ρ) between the value associated to the motor current (Iₘₒₜ) and the value of the bicycle longitudinal acceleration (aₓ) associated to the signal representative of the longitudinal acceleration;
• switch to a disabling state ("Deactivate motor") and supply the second preliminary signal of absence of the cyclist if said ratio (p) is greater than a predetermined threshold value;
wherein said module (3) for determining the presence or absence of the cyclist further comprises a synthesis module (5) configured to generate said activation or deactivation signal (Enable/Disable) to be delivered to the control module (2) of the electric motor (102) based on the combination of said first and second and if present, further preliminary signals of absence or presence of the cyclist.

2. Pedal assisted bicycle (100) according to claim 1, said control system (1) further comprising a module for detecting the bicycle roll angle (ϕ) adapted to generate a signal representative of the bicycle roll angle (ϕ) and/or a module for determining the bicycle pitch angle (θ) adapted to generate a signal representative of the bicycle pitch angle (θ), said modules for detecting the bicycle roll (ϕ) and pitch (θ) angles being configured for generating said signals representative of the roll (ϕ) and pitch (θ) angles based on signals from the inertial measuring unit or being formed by sensors for directly measuring said roll (ϕ) and pitch (θ) angles,
wherein each of said plurality of modules (5, 6, 7, 8, 10, 11, 12) for preliminarily determining the presence or absence of the cyclist is configured for generating the respective signal of absence or presence of the cyclist based on one or more among the motor current (Iₘₒₜ), the signal representative of the wheel speed (ω_{w}), the signal of activation/deactivation of the starting device, the one or more signals representative of the magnitudes detected by the inertial measuring unit (4), the signal representative of the roll angle (ϕ), the signal representative of the pitch angle (θ).

3. Pedal assisted bicycle (100) according to claims 1 or 2, wherein said speed checking module (6) is configured to:
- supply the first preliminary signal of absence of the cyclist as long as the wheel speed value associated to the signal representative of the wheel speed (ω_{w}) remains under a first wheel speed threshold value;
- supply the first preliminary signal of presence of the cyclist when the wheel speed value associated to the signal representative of the wheel speed (ω_{w}) exceeds said first predetermined threshold value;
- supply the first preliminary signal of absence of the cyclist when, after the first predetermined threshold value has been exceeded, the wheel speed value associated to the signal representative of the wheel speed (ω_{w}) goes under a second predetermined threshold value less than the first predetermined threshold value.

4. Pedal assisted bicycle (100) according to claim 2 or claim 3 in the version of depending on claim 2, wherein said plurality of modules comprises a roll stability checking module (7) configured to:
- determine a predetermined roll angle threshold value corresponding to the bicycle speed detected based on the signal representative of the wheel speed (ω_{w});
- compare the bicycle roll angle value determined from the signal representative of the roll angle (ϕ) with said predetermined roll angle threshold value;
- supply at the output a preliminary signal of the presence of the cyclist if the difference between the detected roll angle value and the predetermined roll angle threshold value is less than a predetermined offset;
- supply at the output the preliminary signal of the absence of the cyclist if the absolute value of the difference between the detected roll angle value and the predetermined roll angle threshold value is greater than said predetermined offset.

5. Pedal assisted bicycle (100) according to any of claims 1 to 3, wherein the inertial measuring unit is further configured to detect a lateral acceleration (a_{y}) and generate a signal representative of the same,
wherein said roll stability checking module (7) is further configured to:
- determine a predetermined lateral acceleration threshold value corresponding to the bicycle speed based on the signal representative of the wheel speed (ω_{w});
- compare the lateral acceleration (a_{y}) absolute value of the bicycle with said predetermined acceleration threshold value;
- supply at the output a preliminary signal of the presence of the cyclist if the detected lateral acceleration is greater than the predetermined lateral acceleration threshold value;
- supply at the output a preliminary signal of the absence of the cyclist if the detected lateral acceleration is less than the predetermined lateral acceleration threshold value.

6. Pedal assisted bicycle (100) according to any of the preceding claims,
wherein the inertial measuring unit is further configured to detect a vertical acceleration (a_{z}) and generate a signal representative of the same,
wherein said plurality of modules comprises a module (8) for checking the oscillating mass comprising:
- a first portion (8') configured to determine a level of energy associated to the signal representative of the bicycle vertical acceleration (a_{z}) in a first frequency range;
- a second portion (8") configured to determine a level of energy associated to the signal representative of the bicycle vertical acceleration (a_{z}) in a second frequency range greater than the first frequency range;
- a comparison module (X I) configured to:
- compare the levels of energy associated to the signal representative of the vertical acceleration (a_{z}) delivered by the first (8') and second (8") portions;
- delivere at the output a provisional signal of the presence of the cyclist if the energy associated to the vertical acceleration signal filtered in the first frequency range is greater than the energy associated to the vertical acceleration signal filtered in the second frequency range;
- delivere at the output a provisional signal of the absence of the cyclist if the energy associated to the vertical acceleration signal filtered in the first frequency range is less than the energy associated to the vertical acceleration signal filtered in the second frequency range;
- a third portion (8"') configured to:
- determine a level of overall energy associated to the signal representative of the bicycle vertical acceleration;
- compare said overall energy level associated to the bicycle vertical acceleration with a predetermined threshold value;
- deliver at the output an authorization signal (OK) if said level of overall energy associated to the vertical acceleration is greater than said predetermined threshold value;
- deliver at the output a non-authorization signal (NO) if said overall energy level associated to the vertical acceleration is less than said predetermined threshold value;
- a synthesis module (9) of the module (8) for checking the oscillating mass configured to deliver at the output, as a preliminary signal of presence or absence of the cyclist (1/0), said provisional signal of absence or presence of the cyclist if it receives at the input said authorization signal (OK) from comparison module and the signal representative of the wheel speed (ω_{w}) delivers a positive value of said wheel speed.

7. Pedal assisted bicycle (100) according to any of the preceding claims, wherein the inertial measuring unit is further configured to detect a yaw angular speed (ω_{z}) of the bicycle and generate a signal representative of the same, wherein said plurality of modules comprises a module (10) for checking the yaw stability, configured for:
- determining a level of energy associated to the signal representative of the bicycle yaw angular speed (ω_{z}) in a predetermined low frequency range and comparing it with a predetermined energy threshold value;
- delivering a preliminary signal of the presence of the cyclist if the wheel speed value associated to the signal representative of the wheel signal (ω_{w}) is positive and said level of energy associated to the signal representative of the yaw angular speed (ω_{z}) is greater than said predetermined energy threshold value;
- delivering a preliminary signal of the absence of the cyclist if the wheel speed value associated to the signal representative of the wheel signal (ω_{w}) is positive and said level of energy associated to the signal representative of the yaw angular speed (ω_{z}) is less than said predetermined energy threshold value.

8. Pedal assisted bicycle (100) according to claim 2 or any of claims 3 to 7 in a version of being dependent on claim 2, wherein said plurality of modules comprises a human-machine interface module (12) configured for delivering at the output a preliminary signal of absence of the cyclist if it occurs at least one of the following circumstances:
- the activation/deactivation signal (ON/OFF) from the activation device corresponds to a deactivation condition;
- the signal representative of the pitch angle (θ) exceeds a predetermined threshold value;
- the signal representative of the roll angle (ϕ) exceeds a predetermined threshold value.

## Patentansprüche

1. Pedalunterstütztes Fahrrad (100), umfassend einen Elektromotor (101), der mit einem Rad (102) des Fahrrads assoziiert ist, eine Pedalschubgruppe (103), die von einem Nutzer getreten wird, einen Antrieb (104), der betriebswirksam zwischen der Pedalschubgruppe (103) und einem der Räder (102) des Fahrrads eingesetzt ist, und ein Steuerungssystem (1), umfassend:
- einen Sensor, der konfiguriert ist, um die Drehzahl (ω_{w}) des Rads (102) zu erfassen und ein Signal zu generieren, das repräsentativ für die Raddrehzahl ist;
- eine Trägheitsmesseinheit, die konfiguriert ist, um eine Längsbeschleunigung (aₓ) des Fahrrads und vorzugsweise entweder die Seitenbeschleunigung (a_{y}) und/oder die vertikale Beschleunigung (a_{z}) und/oder die Scherwinkelgeschwindigkeit (ω_{z}) des Fahrrads zu erfassen und ein Signal zu generieren, dass dafür repräsentativ ist;
- eine Startvorrichtung, die ausgelegt ist, um ein Aktivierungs- oder Deaktivierungssignal (ON/OFF) nach einem Aktivierungs- oder Deaktivierungsbefehl durch den Radfahrer zuzuführen;
- ein Modul (2) zur Steuerung des Elektromotors (102), wobei das Steuerungsmodul konfiguriert ist, um eine Motorstromstärke (Iₘₒₜ) bereitzustellen, die dem Elektromotor (102) zugeführt wird, um diesen zu steuern;
- ein Modul (3), um die Anwesenheit oder Abwesenheit des Radfahrers auf dem Fahrrad zu ermitteln, wobei das Ermittlungsmodul konfiguriert ist, um dem Steuerungsmodul (2) des Elektromotors (102) ein Aktivierungs- oder Deaktivierungssignal (Enable/Disable) zuzuführen, je nachdem, ob jeweils die Anwesenheit oder die Abwesenheit des Radfahrers erfasst wird,
wobei das Ermittlungsmodul (3) eine Vielzahl von Modulen (6, 7, 8, 10, 11, 12) umfasst, um die Anwesenheit oder Abwesenheit des Radfahrers im Vorfeld zu ermitteln, von denen ein jedes konfiguriert ist, um ein entsprechendes Vorsignal der Anwesenheit oder Abwesenheit des Radfahrers (1/0) zu generieren, basierend entweder auf der Motorstromstärke (Iₘₒₜ) und/oder dem Signal, das repräsentativ für die Raddrehzahl (ω_{w}) ist, und/oder dem Aktivierungs-/Deaktivierungssignal der Startvorrichtung (ON/OFF) und/oder dem einen oder den mehreren Signalen, die repräsentativ für eine oder mehrere der Größen sind, die von der Trägheitsmesseinheit (aₓ, a_{y}, a_{z}, ω_{w}) erfasst wurden,
**dadurch gekennzeichnet, dass** die Vielzahl von Modulen umfasst:
- ein Drehzahlprüfmodul (6), das konfiguriert ist, um das Signal zu empfangen, das repräsentativ für die Raddrehzahl (ω_{w}) ist, und um ein erstes Vorsignal der Abwesenheit oder Anwesenheit des Radfahrers zuzuführen, das auf einem Vergleich des für die Raddrehzahl (ω_{w}) repräsentativen Signals mit einem oder mehreren vorgegebenen Schwellenwerten basiert;
- ein Modul zur Prüfung der Masse des Radfahrers (11), das konfiguriert ist, um das Signal zu empfangen, das repräsentativ für die Raddrehzahl (ω_{w}) ist, das Signal, das repräsentativ für die Motorstromstärke (Iₘₒₜ) und die Längsbeschleunigung (aₓ) des Fahrrads ist,
wobei das Modul zur Prüfung der Masse des Radfahrers, wenn die Raddrehzahl, die mit dem Signal assoziiert ist, das repräsentativ für die Raddrehzahl (ω_{w}) ist, positiv ist, konfiguriert ist, um
• normalerweise in einem Aktivierungszustand ("Idle") zu sein und ein zweites Vorsignal für die Anwesenheit des Radfahrers zuzuführen;
• das Signal, das repräsentativ für die Motorstromstärke (Iₘₒₜ) ist, mit einem vorgegebenen Stromstärkenschwellenwert ("current_threshold") zu vergleichen;
• in einen Warnzustand ("watch") umzuschalten, wenn der mit dem für den Wert der Motorstromstärke (Iₘₒₜ) repräsentativen Signal assoziierte Wert größer ist als der vorgegebene Stromstärkenschwellenwert ("current_threshold"), und das zweite Vorsignal für die Anwesenheit des Radfahrers zuzuführen;
• ein Verhältnis (ρ) zwischen dem mit der Motorstromstärke (Iₘₒₜ) assoziierten Wert und dem Wert der Längsbeschleunigung des Fahrrads (aₓ), der mit dem Signal assoziiert ist, das repräsentativ für die Längsbeschleunigung ist, zu ermitteln, wenn es sich in einem Warnzustand befindet;
• in einen Deaktivierungszustand ("Deactivate motor") umzuschalten und das zweite Vorsignal der Abwesenheit des Radfahrers zuzuführen, wenn das genannte Verhältnis (ρ) größer ist als ein vorgegebener Schwellenwert,
wobei das Modul (3) zum Ermitteln der Anwesenheit oder Abwesenheit des Radfahrers zudem ein Synthesemodul (5) umfasst, das konfiguriert ist, um das Aktivierungs- oder Deaktivierungssignal (Enable/Disable) zu generieren, das dem Steuerungsmodul (2) des Elektromotors (102) zuzuführen ist, basierend auf der Kombination des ersten und zweiten und - sofern vorhanden - weiteren Vorsignale für die Abwesenheit oder Anwesenheit des Radfahrers.

2. Pedalunterstütztes Fahrrad (100) nach Anspruch 1, wobei das Steuerungssystem (1) zudem ein Modul umfasst, um den Rollwinkel (ϕ) des Fahrrads zu erfassen, ausgelegt, um ein Signal zu generieren, das repräsentativ für den Rollwinkel (ϕ) des Fahrrads ist, und/oder ein Modul zum Ermitteln des Steigungswinkels (θ) des Fahrrads, ausgelegt, um ein Signal zu generieren, das repräsentativ für den Steigungswinkel (θ) des Fahrrads ist, wobei die Module zum Erfassen des Rollwinkels (ϕ) und des Steigungswinkels (θ) des Fahrrads konfiguriert sind, um die Signale zu generieren, die repräsentativ für den Rollwinkel (ϕ) und den Steigungswinkel (θ) sind, basierend auf Signalen von der Trägheitsmesseinheit oder geformt durch Sensoren für die direkte Messung des Rollwinkels (ϕ) und des Steigungswinkels (θ),
wobei ein jedes der Vielzahl von Modulen (5, 6, 7, 8, 10, 11, 12), um die Anwesenheit oder Abwesenheit des Radfahrers im Vorfeld zu ermitteln, konfiguriert ist, um das entsprechende Signal der Abwesenheit oder Anwesenheit des Radfahrers zu generieren, basierend entweder auf der Motorstromstärke (Iₘₒₜ) und/oder dem Signal, das repräsentativ für die Raddrehzahl (ω_{w}) ist, und/oder dem Aktivierungs-/Deaktivierungssignal der Startvorrichtung und/oder dem einen oder den mehreren Signalen, die repräsentativ für eine oder mehrere der Größen sind, die von der Trägheitsmesseinheit (4) erfasst werden, und/oder dem Signal, das repräsentativ für den Rollwinkel (ϕ) ist, und/oder dem Signal, das repräsentativ für den Steigungswinkel (θ) ist.

3. Pedalunterstütztes Fahrrad (100) nach Anspruch 1 oder 2, wobei das Drehzahlprüfmodul (6) konfiguriert ist, um
- das erste Vorsignal für die Abwesenheit des Radfahrers zuzuführen, wenn der Raddrehzahlwert, der mit dem Signal assoziiert ist, das repräsentativ für die Raddrehzahl (ω_{w}) ist, unter einem ersten Raddrehzahlschwellenwert bleibt;
- das erste Vorsignal für die Anwesenheit des Radfahrers zuzuführen, wenn der Raddrehzahlwert, der mit dem Signal assoziiert ist, das repräsentativ für die Raddrehzahl (ω_{w}) ist, den ersten vorgegebenen Schwellenwert überschreitet;
- das erste Vorsignal für die Abwesenheit des Radfahrers zuzuführen, wenn der Raddrehzahlwert, der mit dem Signal assoziiert ist, das repräsentativ für die Raddrehzahl (ω_{w}) ist, nach dem Überschreiten des ersten vorgegebenen Schwellenwerts unter einen zweiten vorgegebenen Schwellenwert fällt, der geringer ist als der erste vorgegebene Schwellenwert.

4. Pedalunterstütztes Fahrrad (100) nach Anspruch 2 oder Anspruch 3, sofern abhängig von Anspruch 2, wobei die Vielzahl von Modulen ein Rollstabilitätsprüfmodul (7) umfasst, das konfiguriert ist, um
- einen vorgegebenen Rollwinkelschwellenwert zu ermitteln, der der Fahrradgeschwindigkeit entspricht, die basierend auf dem Signal erfasst wurde, das repräsentativ für die Raddrehzahl (ω_{w}) ist;
- den anhand des Signals, das repräsentativ für den Rollwinkel (ϕ) ist, ermittelten Rollwinkelwert des Fahrrads mit dem vorgegebenen Rollwinkelschwellenwert zu vergleichen;
- am Ausgang ein Vorsignal für die Anwesenheit des Radfahrers zuzuführen, wenn der Unterschied zwischen dem erfassten Rollwinkelwert und dem vorgegebenen Rollwinkelschwellenwert geringer ist als ein vorgegebener Versatzwert;
- am Ausgang das Vorsignal für die Abwesenheit des Radfahrers zuzuführen, wenn der Absolutwert des Unterschieds zwischen dem erfassten Rollwinkelwert und dem vorgegebenen Rollwinkelschwellenwert größer ist als der vorgegebene Versatzwert.

5. Pedalunterstütztes Fahrrad (100) nach einem der Ansprüche 1 bis 3, wobei die Trägheitsmesseinheit zudem konfiguriert ist, um eine Seitenbeschleunigung (a_{y}) zu erfassen und ein Signal zu generieren, das für diese repräsentativ ist, wobei das Rollstabilitätsprüfmodul (7) zudem konfiguriert ist, um
- einen vorgegebenen Seitenbeschleunigungsschwellenwert zu ermitteln, der der Fahrradgeschwindigkeit entspricht, basierend auf dem Signal, das repräsentativ für die Raddrehzahl (ω_{w}) ist;
- den Absolutwert der Seitengeschwindigkeit (a_{y}) des Fahrrads mit dem vorgegebenen Beschleunigungsschwellenwert zu vergleichen;
- am Ausgang ein Vorsignal für die Anwesenheit des Radfahrers zuzuführen, wenn die erfasste Seitenbeschleunigung größer ist als der vorgegebene Seitenbeschleunigungsschwellenwert;
- am Ausgang ein Vorsignal für die Abwesenheit des Radfahrers zuzuführen, wenn die erfasste Seitenbeschleunigung geringer ist als der vorgegebene Seitenbeschleunigungsschwellenwert.

6. Pedalunterstütztes Fahrrad (100) nach einem der vorhergehenden Ansprüche, wobei die Trägheitsmesseinheit zudem konfiguriert ist, um eine vertikale Beschleunigung (a_{z}) zu erfassen und ein Signal zu generieren, das für diese repräsentativ ist,
wobei die Vielzahl von Modulen ein Modul (8) umfasst, um die schwingende Masse zu prüfen, umfassend:
- einen ersten Abschnitt (8'), der konfiguriert ist, um ein Energieniveau zu ermitteln, das mit dem Signal assoziiert ist, das repräsentativ für die vertikale Beschleunigung (a_{z}) des Fahrrads in einem ersten Frequenzbereich ist;
- einen zweiten Abschnitt (8"), der konfiguriert ist, um ein Energieniveau zu ermitteln, das mit dem Signal assoziiert ist, das repräsentativ für die vertikale Beschleunigung (a_{z}) des Fahrrads in einem zweiten Frequenzbereich ist, der größer als der erste Frequenzbereich ist;
- ein Vergleichsmodul (X I), das konfiguriert ist, um
- die Energieniveaus zu vergleichen, die mit dem Signal assoziiert sind, das repräsentativ für die vertikale Beschleunigung (a_{z}) ist, das vom ersten (8') und vom zweiten (8") Abschnitt zugeführt wird;
- am Ausgang ein vorläufiges Signal für die Anwesenheit des Radfahrers zuzuführen, wenn die Energie, die mit dem vertikalen Beschleunigungssignal assoziiert ist, gefiltert im ersten Frequenzbereich, größer ist als die Energie, die mit dem vertikalen Beschleunigungssignal assoziiert ist, gefiltert im zweiten Frequenzbereich;
- am Ausgang ein vorläufiges Signal für die Abwesenheit des Radfahrers zuzuführen, wenn die Energie, die mit dem vertikalen Beschleunigungssignal assoziiert ist, gefiltert im ersten Frequenzbereich, geringer ist als die Energie, die mit dem vertikalen Beschleunigungssignal assoziiert ist, gefiltert im zweiten Frequenzbereich;
- einen dritten Abschnitt (8"'), der konfiguriert ist, um
- ein Gesamtenergieniveau zu ermitteln, das mit dem Signal assoziiert ist, das repräsentativ für die vertikale Beschleunigung des Fahrrads ist;
- dieses Gesamtenergieniveau, das mit der vertikalen Beschleunigung des Fahrrads assoziiert ist, mit einem vorgegebenen Schwellenwert zu vergleichen;
- am Ausgang ein Autorisierungssignal (OK) zuzuführen, wenn das Gesamtenergieniveau, das mit der vertikalen Beschleunigung assoziiert ist, größer ist als der vorgegebene Schwellenwert;
- am Ausgang ein Nichtautorisierungssignal (NO) zuzuführen, wenn das Gesamtenergieniveau, das mit der vertikalen Beschleunigung assoziiert ist, geringer ist als der vorgegebene Schwellenwert;
- ein Synthesemodul (9) des Moduls (8) zur Prüfung der schwingenden Masse, das konfiguriert ist, um am Ausgang als Vorsignal für die Anwesenheit oder Abwesenheit des Radfahrers (1/0) das vorläufige Signal der Abwesenheit oder Anwesenheit des Radfahrers zuzuführen, wenn es am Eingang das Autorisierungssignal (OK) vom Vergleichsmodul empfängt und das Signal, das repräsentativ für die Raddrehzahl (ω_{w}) ist, einen positiven Wert für die Raddrehzahl liefert.

7. Pedalunterstütztes Fahrrad (100) nach einem der vorhergehenden Ansprüche, wobei die Trägheitsmesseinheit zudem konfiguriert ist, um eine Scherwinkelgeschwindigkeit (ω_{z}) des Fahrrads zu erfassen und ein Signal zu generieren, das dafür repräsentativ ist, wobei die Vielzahl von Modulen ein Modul (10) umfasst, um die Scherstabilität zu prüfen, das konfiguriert ist, um
- ein Energieniveau zu ermitteln, das mit dem Signal assoziiert ist, das repräsentativ für Scherwinkelgeschwindigkeit (ω_{z}) des Fahrrads in einem vorgegebenen Niederfrequenzbereich ist, und um dieses mit einem vorgegebenen Energieschwellenwert zu vergleichen;
- ein Vorsignal für die Anwesenheit des Radfahrers zuzuführen, wenn der Raddrehzahlwert, der mit dem Signal assoziiert ist, das repräsentativ für das Radsignal (ω_{w}) ist, positiv ist und das Energieniveau, das mit dem Signal assoziiert ist, das repräsentativ für die Scherwinkelgeschwindigkeit (ω_{z}) ist, größer ist als der vorgegebene Energieschwellenwert;
- ein Vorsignal für die Abwesenheit des Radfahrers zuzuführen, wenn der Raddrehzahlwert, der mit dem Signal assoziiert ist, das repräsentativ für das Radsignal (ω_{w}) ist, positiv ist und das Energieniveau, das mit dem Signal assoziiert ist, das repräsentativ für die Scherwinkelgeschwindigkeit (ω_{z}) ist, geringer ist als der vorgegebene Energieschwellenwert.

8. Pedalunterstütztes Fahrrad (100) nach Anspruch 2 oder einem der Ansprüche 3 bis 7 in einer Version, in der diese von Anspruch 2 abhängig sind, wobei die Vielzahl von Modulen ein Mensch-Maschine-Schnittstellenmodul (12) umfasst, das konfiguriert ist, um am Ausgang ein Vorsignal für die Abwesenheit des Radfahrers zuzuführen, wenn mindestens einer der folgenden Umstände eintritt:
- Das Aktivierungs-/Deaktivierungssignal (ON/OFF) der Aktivierungsvorrichtung entspricht dem Deaktivierungszustand.
- Das Signal, das repräsentativ für den Steigungswinkel (θ) ist, überschreitet einen vorgegebenen Schwellenwert.
- Das Signal, das repräsentativ für den Rollwinkel (ϕ) ist, überschreitet einen vorgegebenen Schwellenwert.

## Revendications

1. Bicyclette à pédalage assisté (100) comprenant un moteur électrique (101) associé à une roue (102) de la bicyclette, un groupe de poussée (103) de pédalage à animer d'un mouvement de pédalage par un utilisateur, une transmission (104) interposée de manière fonctionnelle entre ledit groupe de poussée (103) de pédalage et l'une des roues (102) de la bicyclette, et un système de commande (1) comprenant :
- un capteur configuré pour détecter la vitesse (ω_{w}) de ladite roue (102) et pour générer un signal représentatif de la vitesse de la roue ;
- une unité de mesure inertielle configurée pour détecter une accélération longitudinale (aₓ) de la bicyclette et, de préférence, un ou plusieurs éléments parmi l'accélération latérale (a_{y}), l'accélération verticale (a_{z}) et la vitesse d'angle de lacet (ω_{z}) de la bicyclette génèrent un signal représentatif de celle-ci ;
- un dispositif de démarrage adapté pour délivrer un signal d'activation ou de désactivation (ON/OFF) suite à une commande d'activation ou de désactivation par le cycliste ;
- un module (2) servant à commander le moteur électrique (102), le module de commande étant configuré pour délivrer un courant de moteur (Iₘₒₜ) à délivrer au moteur électrique (102) pour le commander ;
- un module (3) servant à déterminer la présence ou l'absence du cycliste sur la bicyclette, le module de détermination étant configuré pour délivrer au module de commande (2) du moteur électrique (102) un signal d'activation ou de désactivation (Enable/Disable) selon qu'il est détecté la présence ou l'absence du cycliste, respectivement ;
dans laquelle ledit module de détermination (3) comprend une pluralité de modules (6, 7, 8, 10, 11, 12) servant à déterminer de manière préliminaire la présence ou l'absence du cycliste, chacun étant configuré pour générer un signal préliminaire correspondant de présence ou d'absence du cycliste (1/0) basé sur un ou plusieurs éléments parmi le courant du moteur (Iₘₒₜ), le signal représentatif de la vitesse de la roue (ω_{w}), le signal d'activation/désactivation du dispositif de démarrage (ON/OFF), le ou les signaux représentatifs d'une ou plusieurs grandeurs détectées par l'unité de mesure inertielle (aₓ, a_{y}, a_{z}, ω_{w}) ;
**caractérisée en ce que** la pluralité de modules comprend :
- un module de contrôle de vitesse (6) configuré pour recevoir le signal représentatif de la vitesse de la roue (ω_{w}) et pour fournir un premier signal préliminaire d'absence ou de présence du cycliste basé sur une comparaison du signal représentatif de la vitesse de la roue (ω_{w}) avec une ou plusieurs valeurs de seuil prédéterminées ;
- un module de contrôle de masse du cycliste (11) configuré pour recevoir le signal représentatif de la vitesse de la roue (ω_{w}), le signal représentatif du courant du moteur (Iₘₒₜ) et l'accélération longitudinale (aₓ) de la bicyclette,
dans laquelle le module de contrôle de masse du cycliste est configuré pour, lorsque la valeur de la vitesse de la roue associée au signal représentatif de la vitesse de la roue (ω_{w}) est positive :
• être normalement dans un état d'activation (« Idle ») et fournir un deuxième signal préliminaire de la présence du cycliste ;
• comparer le signal représentatif du courant du moteur (Iₘₒₜ) avec une valeur seuil de courant prédéterminée (« current_threshold ») ;
• passer à un état d'alerte (« watch ») dans le cas où la valeur associée au signal représentatif de la valeur du courant moteur (Iₘₒₜ) est supérieure à la valeur seuil de courant prédéterminée (« current_threshold ») et fournir le second signal préliminaire de la présence du cycliste ;
• lorsqu'il est en état d'alerte, déterminer un rapport (ρ) entre la valeur associée au courant du moteur (Iₘₒₜ) et la valeur de l'accélération longitudinale (aₓ) de la bicyclette associée au signal représentatif de l'accélération longitudinale ;
• passer à un état de désactivation (« Deactivate motor ») et fournir le deuxième signal préliminaire d'absence du cycliste si ledit rapport (ρ) est supérieur à une valeur seuil prédéterminée ;
dans laquelle ledit module (3) servant à déterminer la présence ou l'absence du cycliste comprend de plus un module de synthèse (5) configuré pour générer ledit signal d'activation ou de désactivation (Enable/Disable) à délivrer au module de commande (2) du moteur électrique (102) sur la base de la combinaison desdits premier et second et, s'ils sont présents, d'autres signaux préliminaires d'absence ou de présence du cycliste.

2. Bicyclette (100) à pédalage assisté selon la revendication 1, ledit système de commande (1) comprenant de plus un module de détection de l'angle de mouvement de roulis (ϕ) de la bicyclette adapté pour générer un signal représentatif de l'angle de mouvement de roulis (ϕ) de la bicyclette et/ou un module de détermination de l'angle d'attaque (θ) de la bicyclette adapté pour générer un signal représentatif de l'angle d'attaque (θ) de la bicyclette, lesdits modules de détection des angles de mouvement de roulis (ϕ) et d'attaque (θ) de la bicyclette étant configurés pour générer lesdits signaux représentatifs des angles de mouvement de roulis (ϕ) et d'attaque (θ) sur la base de signaux provenant de l'unité de mesure inertielle ou étant formés par des capteurs servant à mesurer directement lesdits angles de mouvement de roulis (ϕ) et d'attaque (θ),
dans laquelle chacun de ladite pluralité de modules (5, 6, 7, 8, 10, 11, 12) servant à déterminer de façon préliminaire la présence ou l'absence du cycliste est configuré pour générer le signal respectif d'absence ou de présence du cycliste sur la base d'un ou plusieurs éléments parmi le courant du moteur (Iₘₒₜ), le signal représentatif de la vitesse des roues (ω_{w}), le signal d'activation/désactivation du dispositif de démarrage, le ou les signaux représentatifs des grandeurs détectées par l'unité de mesure inertielle (4), le signal représentatif de l'angle de mouvement de roulis (ϕ), le signal représentatif de l'angle d'attaque (θ).

3. Bicyclette à pédalage assisté (100) selon les revendications 1 ou 2, dans laquelle ledit module de contrôle de la vitesse (6) est configuré pour :
- fournir le premier signal préliminaire d'absence du cycliste tant que la valeur de la vitesse de la roue associée au signal représentatif de la vitesse de la roue (ω_{w}) reste inférieure à une première valeur seuil de la vitesse de la roue ;
- fournir le premier signal préliminaire de présence du cycliste lorsque la valeur de la vitesse de la roue associée au signal représentatif de la vitesse de la roue (ω_{w}) dépasse ladite première valeur seuil prédéterminée ;
- fournir le premier signal préliminaire d'absence du cycliste lorsque, après que la première valeur seuil prédéterminée a été dépassée, la valeur de la vitesse de la roue associée au signal représentatif de la vitesse de la roue (ω_{w}) passe sous une deuxième valeur seuil prédéterminée inférieure à la première valeur seuil prédéterminée.

4. Bicyclette à pédalage assisté (100) selon la revendication 2 ou la revendication 3 dans la version où elle dépend de la revendication 2, dans laquelle ladite pluralité de modules comprend un module de contrôle (7) de stabilité au mouvement de roulis configuré pour :
- déterminer une valeur seuil prédéterminée d'angle de mouvement de roulis correspondant à la vitesse de la bicyclette détectée sur la base du signal représentatif de la vitesse de la roue (ω_{w}) ;
- comparer la valeur d'angle de mouvement de roulis de la bicyclette déterminée à partir du signal représentatif de l'angle de mouvement de roulis (ϕ) avec ladite valeur seuil d'angle de mouvement de roulis prédéterminée ;
- fournir à la sortie un signal préliminaire de la présence du cycliste si la différence entre la valeur de l'angle de mouvement de roulis détectée et la valeur seuil de l'angle de mouvement de roulis prédéterminée est inférieure à un décalage prédéterminé ;
- fournir à la sortie le signal préliminaire de l'absence du cycliste si la valeur absolue de la différence entre la valeur d'angle de mouvement de roulis détectée et la valeur seuil d'angle de mouvement de roulis prédéterminée est supérieure audit décalage prédéterminé.

5. Bicyclette à pédalage assisté (100) selon l'une quelconque des revendications 1 à 3, dans laquelle l'unité de mesure inertielle est de plus configurée pour détecter une accélération latérale (a_{y}) et générer un signal représentatif de celle-ci, dans laquelle ledit module de contrôle (7) de stabilité au mouvement de roulis est de plus configuré pour :
- déterminer une valeur seuil d'accélération latérale prédéterminée correspondant à la vitesse de la bicyclette sur la base du signal représentatif de la vitesse de la roue (ω_{w}) ;
- comparer la valeur absolue de l'accélération latérale (a_{y}) de la bicyclette avec ladite valeur seuil d'accélération prédéterminée ;
- fournir à la sortie un signal préliminaire de la présence du cycliste si l'accélération latérale détectée est supérieure à la valeur seuil d'accélération latérale prédéterminée ;
- fournir à la sortie un signal préliminaire de l'absence du cycliste si l'accélération latérale détectée est inférieure à la valeur seuil d'accélération latérale prédéterminée.

6. Bicyclette à pédalage assisté (100) selon l'une quelconque des revendications précédentes, dans laquelle l'unité de mesure inertielle est de plus configurée pour détecter une accélération verticale (a_{z}) et générer un signal représentatif de celle-ci,
dans laquelle ladite pluralité de modules comprend un module (8) pour vérifier la masse oscillante comprenant :
- une première partie (8') configurée pour déterminer un niveau d'énergie associé au signal représentatif de l'accélération verticale (a_{z}) de la bicyclette dans une première gamme de fréquences ;
- une deuxième partie (8") configurée pour déterminer un niveau d'énergie associé au signal représentatif de l'accélération verticale (a_{z}) de la bicyclette dans une deuxième gamme de fréquences supérieure à la première gamme de fréquences ;
- un module de comparaison (X I) configuré pour :
- comparer les niveaux d'énergie associés au signal représentatif de l'accélération verticale (a_{z}) délivré par les première (8') et deuxième (8") parties ;
- délivrer à la sortie un signal provisoire de la présence du cycliste si l'énergie associée au signal d'accélération verticale filtré dans la première gamme de fréquences est supérieure à l'énergie associée au signal d'accélération verticale filtré dans la deuxième gamme de fréquences ;
- délivrer à la sortie un signal provisoire d'absence du cycliste si l'énergie associée au signal d'accélération verticale filtré dans la première gamme de fréquences est inférieure à l'énergie associée au signal d'accélération verticale filtré dans la deuxième gamme de fréquences ;
- une troisième partie (8"') configurée pour :
- déterminer un niveau d'énergie global associé au signal représentatif de l'accélération verticale de la bicyclette ;
- comparer ledit niveau d'énergie global associé à l'accélération verticale de la bicyclette avec une valeur seuil prédéterminée ;
- délivrer à la sortie un signal d'autorisation (OK) si ledit niveau d'énergie globale associé à l'accélération verticale est supérieur à ladite valeur seuil prédéterminée ;
- délivrer à la sortie un signal de non-autorisation (NO) si ledit niveau d'énergie global associé à l'accélération verticale est inférieur à ladite valeur seuil prédéterminée ;
- un module de synthèse (9) du module (8) de contrôle de la masse oscillante configuré pour délivrer en sortie, comme signal préliminaire de présence ou d'absence du cycliste (1/0), ledit signal provisoire d'absence ou de présence du cycliste s'il reçoit en entrée ledit signal d'autorisation (OK) du module de comparaison et le signal représentatif de la vitesse de la roue (ω_{w}) délivre une valeur positive de ladite vitesse de la roue.

7. Bicyclette à pédalage assisté (100) selon l'une quelconque des revendications précédentes, dans laquelle l'unité de mesure inertielle est de plus configurée pour détecter une vitesse d'angle de lacet (ω_{z}) de la bicyclette et générer un signal représentatif de celle-ci, dans laquelle ladite pluralité de modules comprend un module (10) pour vérifier la stabilité en lacet, configuré pour :
- déterminer un niveau d'énergie associé au signal représentatif de la vitesse d'angle de lacet (w_{z}) de la bicyclette dans une plage de basses fréquences prédéterminée et le comparer à une valeur seuil d'énergie prédéterminée ;
- délivrer un signal préliminaire de la présence du cycliste si la valeur de la vitesse de la roue associée au signal représentatif du signal de la roue (ω_{w}) est positive et si ledit niveau d'énergie associé au signal représentatif de la vitesse d'angle de lacet (ω_{z}) est supérieur à ladite valeur seuil d'énergie prédéterminée ;
- délivrer un signal préliminaire d'absence du cycliste si la valeur de vitesse de la roue associée au signal représentatif du signal de la roue (ω_{w}) est positive et que ledit niveau d'énergie associé au signal représentatif de la vitesse d'angle de lacet (ω_{w}) est inférieur à ladite valeur seuil d'énergie prédéterminée.

8. Bicyclette à pédalage assisté (100) selon la revendication 2 ou l'une quelconque des revendications 3 à 7 dans une version où elles dépendent de la revendication 2, dans laquelle ladite pluralité de modules comprend un module d'interface (12) homme-machine configuré pour délivrer à la sortie un signal préliminaire d'absence du cycliste s'il se produit au moins une des circonstances suivantes :
- le signal d'activation/désactivation (ON/OFF) du dispositif d'activation correspond à une condition de désactivation ;
- le signal représentatif de l'angle d'attaque (θ) dépasse une valeur seuil prédéterminée ;
- le signal représentatif de l'angle de mouvement de roulis (ϕ) dépasse une valeur seuil prédéterminée.
